# EUROPÄISCHE PATENTSCHRIFT

(11) **EP 2 217 376 B1**
(45) Veröffentlichungstag und Bekanntmachung des Hinweises auf die Patenterteilung: **09.01.2013**
(21) Anmeldenummer: 08850514.4
(22) Anmeldetag: 12.11.2008
(51) Int. Cl.: B01L 3/00, G01N 21/03, G01N 21/05

(54) **KÜVETTE UND VERFAHREN ZUR VERWENDUNG DER KÜVETTE**
CUVETTE AND METHOD FOR USING SAID CUVETTE
CUVETTE ET SON PROCÉDÉ D'UTILISATION

(30) Priorität: 13.11.2007 US 987448 P
(43) Veröffentlichungstag der Anmeldung: 18.08.2010
(73) Patentinhaber: Roche Diagnostics GmbH, 68298 Mannheim (DE); F. Hoffmann-La Roche AG, 4070 Basel (CH)
(72) Erfinder: HUEMER, Herfried, A-8330 Feldbach (AT)
(74) Vertreter: Margotti, Herwig Franz
(86) Internationale Anmeldenummer: PCT/EP2008/009514
(87) Internationale Veröffentlichungsnummer: WO 2009/062667

(56) Entgegenhaltungen:
- EP-A- 0 433 044
- EP-A- 1 225 439
- EP-A- 1 406 079
- DE-A1- 10 316 723
- US-A1- 2007 064 226

## Beschreibung

Eine solche Küvette kommt vor allem in spektroskopischen Analysatoren, insbesondere zur spektroskopischen Bestimmung von Hämoglobinderivaten und davon abgeleiteter Größen (Oxymetrie bzw. Cooxymetrie) zum Einsatz, ist aber auch für nach chemischen Messprinzipien arbeitende Analysatoren und kombinierte spektroskopische und chemische Analysatoren geeignet.

Die Erfindung betrifft weiters ein Verfahren zum spektroskopischen Analysieren einer Probe unter Verwendung einer Küvette.

Die Erfindung betrifft schließlich ein Verfahren zum Hämolysieren einer Blutprobe unter Verwendung einer Küvette.

Oxymetriemodule sind häufig Bestandteile von medizinisch-diagnostischen Analysatorsystemen, insbesondere von Blutgas-Analysatoren. Solche Blutgas-Analysatoren werden beispielsweise als portable Analysatoren zur Bestimmung von POC (Point Of Care) Parametern, beispielsweise der Blutgase (O₂, CO₂, pH), der Elektrolyte (z.B. K⁺, Na⁺, Ca⁺⁺, Cl⁻) der Metabolite (z.B. Glukose und Laktat), des Hämatokrits, der Hämoglobinparameter (z.B. tHb, SO₂, etc.) und Bilirubin entwickelt und werden vor allem zur dezentralen Bestimmung der oben genannten Parameter in Vollblutproben eingesetzt.

Idealerweise sollen solche Analysatoren auch für den "untrainierten" Benutzer einfach und intuitiv zu bedienen sein. Ein weitere wichtige Anforderung an ein solches Gerät ist, dass es aus Sicht des Anwenders "beinahe wartungsfrei" zu bedienen ist. Unter "beinahe wartungsfrei" wird allgemein verstanden, dass auch der (technisch) ungeschulte Anwender zum laufenden Betrieb lediglich in Form von Kassetten und/oder Modulen vorliegende Verbrauchsmaterialien tauscht. Alle Verbrauchsmaterialien (Consumables) sollen durch einfache intuitive Handgriffe vom Anwender tauschbar sein.

In Systemen nach dem Stand der Technik, wie z.B. im US Patent 3,972,614 beschrieben, wurde die optische Messkammer (Küvette) als integriertes Bestandteil des Oxymeters ausgeführt, welches permanent im Gerät verbleibt. Der in US 3,972,614 beschriebene Analysator zur spektroskopischen Bestimmung von Parametern in Blutproben, wie z.B. Hämoglobin, umfasst auch Mittel zur Ultraschall-Hämolyse der Blutprobe, d.h. der Zerstörung der roten Blutkörperchen, um die Blutprobe möglichst streukörperfrei zu machen. Erst dadurch wird die spektroskopische Analyse der Probe möglich.

Nachteilig wirkt sich bei dem bekannten System jedoch das hohe Verstopfungsrisiko während der geplanten Einsatzdauer aus, wobei insbesondere die fluidischen Koppelstellen sowie eine geringe Schichtdicke des Probenkanals Problempunkte darstellen. Falls bei diesen Oxymetersystemen Verschmutzungen oder Verstopfungen im Bereich der Küvette auftauchen, können diese oft nur durch einen aufwendigen Tausch der Küvette behoben werden. Hierzu ist meist eine entsprechende Schulung oder die Anforderung eines Servicetechnikers nötig, so dass häufig längere unplanmäßige Ausfallzeiten des Analysators die Folge sind. Weiterhin bedarf der manuelle Austausch einer Küvette in solchen Systemen oft nachfolgender manueller Justage- und Kalibrierungsschritte, um wieder reproduzierbare Messergebnisse zu erhalten.

Es ist daher eine erste Aufgabe der vorliegenden Erfindung, diese Nachteile zu vermeiden und insbesondere eine Küvette bereitzustellen, welche auch für den "untrainierten" Benutzer einfach und intuitiv zu wechseln ist.

Aus dem Dokument EP 1 586 888 A2 sind ein Verfahren und ein Gerät zur spektroskopischen Messung von Analyten in Proben bekannt. Das Gerät umfasst eine Lichtquelle, die einen Lichtpfad generiert, einen Photodetektor am Ende des Lichtpfads und eine Schlitzöffnung im Lichtpfad, in die händisch eine mit der Probe befüllte Küvette eingeschoben werden kann. Bei der Küvette handelt es sich um ein einfaches Kunststoffteil, das aus einem mit einem Griff versehenen Napf zur Probenaufnahme und einem mit dem Napf gelenkig verbundenen Deckel besteht. Diese Küvette ist ein einfaches Einweg-Produkt, das zur Durchführung von Hämolyse nicht geeignet und auch nicht dafür vorgesehen ist. Vielmehr ist beschrieben, das Gerät für spektroskopische Hämoglobin-Messungen als Indikator für aufgetretene Hämolyse in der Probe zu verwenden. Ein anderer Einsatzzweck des bekannten Gerätes ist die Überwachung der Zersetzung oder Umkehr der Zersetzung von Hämoglobin-basierten Blutsubstituenten durch Messung von Met-Hämoglobin. Aufgrund ihrer simplen Bauweise ist die bekannte Küvette unter Druckbeaufschlagung nicht maßhaltig und kann daher keinesfalls in Analysesystemen verwendet werden, bei denen sie mechanisch vorgespannt und/oder belastet wird, wie es beispielsweise bei der Ultraschall-Hämolyse erforderlich ist. Fehlende Maßhaltigkeit übt nämlich einen großen Einfluss auf das Ergebnis von spektroskopischen Messungen aus. Mit dieser Küvette ist somit keine genaue spektroskopische Analyse von Blutproben möglich.

Es besteht daher nach wie vor das Bedürfnis nach einer Küvette, die austauschbar in einem spektroskopischen Analysator angeordnet werden kann und für genaue Analysen geeignet ist.

Eine weitere Aufgabe, welche durch die vorliegende Erfindung gelöst werden soll, ist die Bereitstellung einer leicht austauschbaren Küvette, welche durch ihr Design und die verwendeten Materialien sowohl zuverlässige Hämoglobinderivatbestimmungen ermöglicht als auch mit einem Ultraschallhämolysator des Analysators so in Wechselwirkung treten kann, dass eine zuverlässige Hämolyse einer Vollblutprobe direkt in der Küvette möglich ist.

Da die Küvette hierbei zugleich funktioneller Bestandteil des hämolysierenden Systems ist, sind auch bezüglich der Positionierung und Ankopplung der Küvette im Analysator weitere Anforderungen zu stellen. So ist es bei einer Hämolyse mittels Ultraschall in der Küvette beispielsweise notwendig, die im Analysator erzeugte Ultraschallenergie in einer möglichst definierten Weise auf die Küvette zu übertragen. Dies kann beispielsweise dadurch erzielt werden, dass die Küvette nach dem Einbringen des Reagenzienpacks in den Analysator mittels eines Klemmmechanismus in einen mechanisch vorgespannten Zustand gebracht wird, welcher bei Entnahme des Reagenzienpacks wieder gelöst werden kann.

Durch diese zusätzlichen Anforderungen sollte die Küvette eine Vielzahl von Funktionalitäten vereinigen:
1. exakte Definition der Höhe des Probenkanals auch bei mechanischer Belastung, insbesondere auch bei Ultraschallapplikation
2. Möglichkeit des Andockens an das weitere Fluidiksystem
3. Toleranzausgleich
4. evtl. Thermostatisierung der Probentemperatur
5. fluidische Dichtheit
6. Ausbildung des Probenkanals als Hämolysekammer
7. definierte mechanische und optische Eigenschaften
8. Druckdichtheit
9. möglichst luftblasenfreie Befüllung mit Blut und vollständige Reinigung
10. Gasdichtheit

Je nach Anforderungen sind alle oder auch nur einzelne dieser Funktionalitäten beim Design der Küvette maßgeblich zu berücksichtigen.

Eine weitere Aufgabe, die durch die vorliegende Erfindung gelöst werden soll, ist das Bereitstellen einer Küvette mit einem Probenkanal von möglichst geringer, aber exakt definierter Höhe, damit einerseits die Probenanalyse mit sehr geringen Probenmengen erfolgen kann und andererseits die Auswirkungen der starken Absorptionswirkung von Blut auf Licht im sichtbaren Wellenlängenbereich reduziert werden. Die besondere Herausforderung bei der Lösung dieser Aufgabe besteht darin, dass die Küvette trotz der geringen Höhe des Probenkanals hervorragende mechanische Stabilität und Maßhaltigkeit aufweisen muss, um ausreichend genaue Ergebnisse zu liefern und dennoch für Hämolyse der Probe im Probenkanal geeignet zu sein.

Die vorliegende Erfindung löst die oben definierten Aufgaben durch Bereitstellen einer Küvette mit den Merkmalen des Anspruchs 1.

Die erfindungsgemäße Küvette umfasst zumindest ein Dichtungselement und zwei transparente Elemente, wobei die beiden transparenten Elementen im Abstand voneinander angeordnet sind und zwei einander gegenüberliegende Begrenzungsflächen eines Probenkanals definieren und das zumindest eine Dichtungselement Seitenwände des Probenkanals definiert, wodurch der Probenkanal als ein in Längsrichtung geschlossener Kanal mit einer Einlassöffnung und einer Auslassöffnung ausgebildet ist. Es ist zumindest ein Abstandshalter vorgesehen, der die transparenten Elemente im Abstand voneinander hält, und zumindest eines der beiden transparenten Elemente weist einen Absatz auf, der sich in Richtung zum anderen transparenten Element erstreckt und eine Begrenzungsfläche des Probenkanals bildet, so dass die Höhe des Probenkanals geringer ist als die Höhe des zumindest einen Abstandshalters.

Durch das Vorsehen des Absatzes an zumindest einem der beiden transparenten Elemente kann eine wohldefinierte Probenkanalhöhe erzielt werden, die kleiner ist als die Höhe des Abstandshalters, z.B. 0,1 oder 1 mm hoch. Dabei sind aber sowohl die beiden transparenten Elemente als auch der Abstandshalter als solide Elemente mit ausreichender Dicke ausgebildet, um die erforderliche hervorragende mechanische Stabilität und Maßhaltigkeit aufweisen zu können und um für Ultraschall-Hämolyse geeignet zu sein.

Damit der Abstandshalter auch bei Ultraschall-Applikationen über seine Lebensdauer zufriedenstellende Maßhaltigkeit beibehält, ist es bevorzugt, ihn aus einem spritzgussfähigen Kunststoff mit hohen Elastizitätsmodul-Werten (E-Modulwerten) von vorzugsweise mehr als 2500 MPa, noch bevorzugter mehr als 5000 MPa, zu fertigen.

Bei einer Ausführungsform der erfindungsgemäßen Küvette mit ausgezeichneter mechanischer Festigkeit und Maßhaltigkeit sind die transparenten Elemente mit dem Abstandshalter mittels eines formbeständigen Klebstoffs verklebt, der vorzugsweise eine definierte Schichtdicke aufweist. Durch Justieren der Position der transparenten Elemente vor dem Aushärten des Klebers ist so eine exakte Probenkanalhöhe einstellbar.

In einer alternativen Ausführungsform der erfindungsgemäßen Küvette sind die transparenten Elemente mit dem Abstandshalter verpresst, zusammengesteckt oder mittels Klammern verbunden. Auch bei dieser Ausführungsform wird eine hohe Formgenauigkeit erreicht, wenn die Einzelteile vor dem Zusammenfügen mechanisch so exakt bearbeitet wurden, dass die erforderlichen engen Passungstoleranzen eingehalten werden.

Das Dichtungselement liegt flächig an den Wänden der Absätze der transparenten Elemente an. Um zu verhindern, dass ein Anteil der Probe aufgrund des Kapillareffekts an der Grenzfläche bzw. in möglicherweise vorhandenen kleinen Zwischenräumen zwischen den transparenten Elementen und dem Dichtungselement eindringt, ist in einer bevorzugten Fortbildung der Erfindung vorgesehen, dass das Dichtungselement im Bereich des erfindungsgemäßen Absatzes an zumindest einem der beiden transparenten Elemente in den Zwischenraum zwischen den transparenten Elementen hineinragt. Dies wird erzielt, indem ein Dichtungselement aus einem elastischen Material, vorzugsweise mit einer Shore D Härte zwischen 50 und 80, noch bevorzugter mit einer Shore D Härte zwischen 60 und 70, verwendet und dieses Dichtungselement gegen die transparenten Elemente gepresst wird. Aufgrund der Nachgiebigkeit des Materials des Dichtungselements wird dieses in den Spalt zwischen den transparenten Elementen gedrängt und bildet einen Dichtungswulst im Spalt. Die Ausbildung des Dichtungswulstes kann gefördert werden, indem die transparenten Elemente an ihren dem Spalt zugewandten Kanten mit einem Radius oder einer Fase versehen werden. Man vermeidet dadurch so genannte "Probenverschleppung", das ist die Kontaminierung einer Probe durch Reste früherer Proben in der Küvette bzw. das Verfälschen von Referenzmessungen. Besonders gute Dichtwirkung und Vermeidung von "Probenverschleppung" wird erzielt, wenn das Dichtungselement an einer Mantelfläche des Absatzes eines bzw. bevorzugt beider transparenter Elemente anliegt.

Wenn für die erfindungsgemäße Küvette ein Dichtungselement aus einem lichtundurchlässigen Material gewählt wird bzw. das Dichtungselement mit einer Schicht aus einem lichtundurchlässigen Material versehen wird, bildet das Dichtungselement weiterhin eine Blende für Streu- und Fremdlicht.

In einer derzeit bevorzugten Ausführungsform der erfindungsgemäßen Küvette bilden das Dichtungselement und der Abstandshalter ein Kombinationselement, z.B. ein 2-Komponenten-Spritzgussteil oder ein Verbund-Pressteil. Mit einem solchen Kombinationselement wird das Assemblieren der Küvette wesentlich vereinfacht und dennoch hervorragenden Festigkeit und Dichtheit erzielt.

Eine Ausführungsform einer erfindungsgemäßen Küvette weist transparente Elemente aus Glas, vorzugsweise Pressglas, auf. Diese Ausführungsform zeichnet sich durch ihre gute Herstellbarkeit und hohe Maßhaltigkeit aus.

Alternativ zu Glas kann gemäß der Erfindung für die transparenten Elemente Kunststoff mit folgenden bevorzugten Eigenschaften verwendet werden: geringe Spannungsdoppelbrechung, geringes Kriechverhalten, keine/geringe Gasdurchlässigkeit, chemische Resistenz, Wärmeformbeständigkeit, optische Transparenz im sichtbaren (VIS) und nahen Infrarot- (NIR) Wellenlängenbereich. Der sichtbare Bereich (VIS) ist als Wellenlängenbereich zwischen 380 und 780 nm definiert; der nahe Infrarotbereich (NIR) liegt zwischen 780 und 1400 nm. Bevorzugt bestehen die transparenten Elemente aus Kunststoffen aus der Gruppe der thermoplastischen Olefin-Polymere, wie beispielsweise Cycloolefin-Copolymere.

Die Auswahl des Materials der transparenten Elemente aus den oben angeführten Materialien lässt auch eine Thermostatisierung der Probe in der Küvette zu. Beispielsweise müssen Blutproben während der spektroskopischen Analyse möglichst genau bei 37°C gehalten werden, da die Spektren temperaturabhängig sind.

In einer Fortbildung der erfindungsgemäßen Küvette ist vorgesehen, dass der Probenkanal einen optischen Messbereich aufweist, in dem die transparenten Elemente planparallel angeordnet sind. Die Einhaltung der Planparallelität hat einen direkten Einfluss auf die Messgenauigkeit bei Absorptionsmessungen. Die erfindungsgemäß erzielte exakte Planparallelität trägt somit zur Erhöhung der Genauigkeit der spektroskopischen Analyse bei. Streulichteinflüsse etc. werden vermieden, wenn der optische Messbereich vom Rand des Probenkanals beabstandet ist.

Damit eine blasenfreie Befüllung des Probenkanals mit der Probe erreicht wird, ist in einer weiteren Ausführungsform der erfindungsgemäßen Küvette der Probenkanal so ausgebildet, dass sich die Breite des Probenkanals zur Einlassöffnung und zur Auslassöffnung hin verjüngt und dabei die Höhe des Probenkanals zunimmt, wobei vorzugsweise die Querschnittsfläche des Probenkanals über seine Länge im Wesentlichen konstant bleibt. Diese Ausgestaltung führt zu einem Probenkanal mit im Wesentlichen konstantem Fließquerschnitt, wodurch eine Wirbelbildung der Probe im Probenkanal unterbunden wird. Vermeidung von Wirbelbildung und Erzielung laminarer Strömung wird durch eine Ausbildung des Probenkanals erreicht, bei der der Probenkanal nur stetigeKanalveränderungen aufweist.

Um die Küvette klein bauen zu können, ist in einer Ausführungsform der erfindungsgemäßen Küvette der Probenkanal bogenförmig ausgebildet.

Wenn die Küvette in ein Consumable (Verbrauchsgut) des spektroskopischen Analysators, insbesondere in ein sogenanntes Fluidpack, welches zum laufenden Betrieb des Analysators benötige Betriebsflüssigkeiten, wie beispielsweise Kalibrations- oder Referenzflüssigkeiten, Wasch- und Reinigungsflüssigkeiten oder auch Reagenzienflüssigkeiten, und/oder Abfallbehälter umfasst und welches turnusmäßig ausgetauscht wird, integriert ist, wird der Küvettenwechsel auch für den "untrainierten" Benutzer einfach und intuitiv, da er in einem Arbeitsgang mit dem Wechsel des Consumable erfolgt.

Die vorliegende Erfindung betrifft auch ein Verfahren zum spektroskopischen Analysieren einer Probe unter Verwendung einer erfindungsgemäßen Küvette. Das Analyseverfahren umfasst das Einbringen der Probe in die Küvette und das spektroskopische Analysieren der Probe in der Küvette.

Ein weiterer Aspekt der vorliegenden Erfindung sieht ein Verfahren zum spektroskopischen Analysieren einer Blutprobe unter Verwendung einer erfindungsgemäßen Küvette vor. Das Analyseverfahren umfasst das Einbringen der Blutprobe in die Küvette, das Hämolysieren der Blutprobe in der Küvette und das spektroskopische Analysieren der hämolysierten Blutprobe in der Küvette.

Weitere Merkmale und Vorteile der Erfindung ergeben sich aus der nachfolgenden Beschreibung von Ausführungsbeispielen unter Bezugnahme auf die Zeichnungen.

Fig. 1A und Fig. 1B zeigen schematisch eine erste Ausführungsform einer erfindungsgemäßen Küvette im Querschnitt und im Längsschnitt in Richtung des Pfeils IB.
Fig. 2A, Fig. 2B und Fig. 2C zeigen eine zweite Ausführungsform einer erfindungsgemäßen Küvette in einer isometrischen Ansicht, in einer Schnittansicht entlang der Linie 2B bzw. in einer Schnittansicht entlang der Linie 2C von Fig. 2A.
Fig. 3 zeigt schematisch eine dritte Ausführungsform einer erfindungsgemäßen Küvette im Querschnitt.
Fig. 4 zeigt schematisch eine vierte Ausführungsform einer erfindungsgemäßen Küvette im Querschnitt.
Fig. 5 zeigt schematisch eine fünfte Ausführungsform einer erfindungsgemäßen Küvette im Querschnitt.
Fig. 6 zeigt schematisch einen modular aufgebauten spektroskopischen Analysators, in dem eine erfindungsgemäße Küvette verwendet wird.

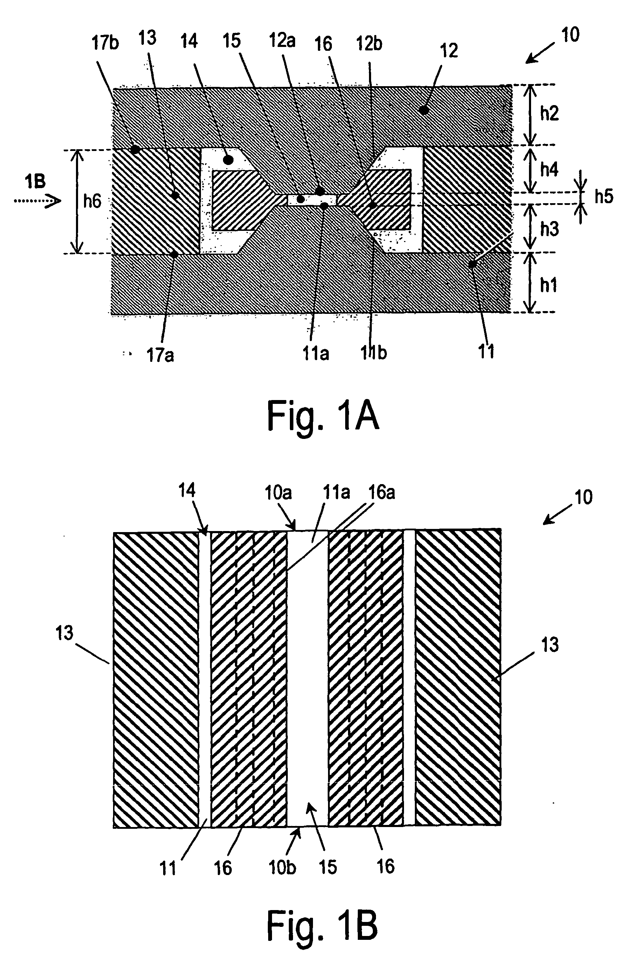

Anhand der schematischen Querschnittsdarstellung von Fig. 1A und der Längsschnittsdarstellung von Fig. 1B entlang des Pfeils 1B in Fig. 1A wird nun eine erste Ausführungsform einer erfindungsgemäßen Küvette. 10 für einen spektroskopischen Analysator beschrieben. Die Küvette 10 umfasst einen Abstandshalter 13, der eine Aussparung 14 bildet. Der Abstandshalter 13 besitzt eine Höhe h6 und weist planparallele Ober- und Unterseiten auf. Weiters umfasst die Küvette 10 ein erstes und ein zweites transparentes Element 11, 12, die eine im Wesentlichen ebene, plattenförmige Basiskonfiguration mit Höhe h1 bzw. h2 aufweisen. Jedes der transparenten Elemente 11,12 weist einen Absatz 11a, 12a auf, der sich von der plattenförmigen Basis um eine Höhe h3, h4 vorstreckt. Die Absätze 11a, 12a besitzen in der vorliegenden Ausführungsform einen trapezförmigen Querschnitt, die Erfindung ist jedoch nicht auf eine solche Querschnittsform beschränkt. Das in der Zeichnung untere erste transparente Element 11 liegt mit seiner Basis flächig an der Unterseite des Abstandshalters 13 an, wobei sich der Absatz 11a des ersten transparenten Elements in die Aussparung 14 des Abstandshalters 13 erstreckt. Das in der Zeichnung obere zweite transparente Element 12 liegt mit seiner. Basis flächig an der Oberseite des Abstandshalters 13 auf, wobei sich der Absatz 12a des zweiten transparenten Elements 12 ebenfalls in die Aussparung 14 des Abstandshalters 13 erstreckt, und zwar so, dass die beiden Absätze 11 a, 12a einander zugewandt sind und einen Abstand h5 voneinander aufweisen, der sich aus der Höhe h6 des Abstandshalters minus den Höhen h3, h4 der Absätze 11a, 12a ergibt, d.h. h5 = h6 - h3 - h4. Die beiden transparenten Elemente 11, 12 sind mit dem Abstandshalter 13 mittels formstabiler Kleberschichten 17a, 17b verklebt, wobei der Kleber vorzugsweise ein UV-härtender Kleber ist, der durch Bestrahlen mit Licht durch die transparenten Elemente 11,12 zum Aushärten gebracht wird.

Weiters umfasst die Küvette 10 ein Dichtungselement 16, das in der Aussparung 14 des Abstandshalters 13 zwischen den Absätzen 11a, 12a angeordnet ist und gegen die Seitenwände 11b, 12b der Absätze 11a, 12a anliegt. Zusammen mit dem Dichtungselement 16 begrenzen die einander zugewandten Flächen der Absätze 11a, 12a einen in dieser Ausführungsform gerade verlaufenden Probenkanal 15. Der Probenkanal 15 mündet an seinen gegenüberliegenden Enden in einer Einlassöffnung 10a und einer Auslassöffnung 10b. Die Höhe des Probenkanals 15 entspricht dem Abstand h5 der einander zugewandten Stirnflächen der Absätze 11a, 12a und ist somit wesentlich geringer als die Höhe h6 des Abstandshalters 13 und als die Höhen h1, h2 der plattenförmigen Basen der transparenten Elemente 11, 12 und als die Gesamthöhe (h1 + h3 bzw. h2 + h4) der transparenten Elemente 11, 12. Daraus ist ersichtlich, dass durch das erfindungsgemäße Prinzip sowohl für den Abstandshalter 13 als auch die transparenten Elemente 11, 12 relativ dickwandige Elemente verwendet werden können, die aufgrund ihrer Konfiguration und Anordnung jedoch einen Probenkanal 15 mit einer sehr geringen Höhe h5 ergeben. Es sei erwähnt, dass in einer Variante dieser ersten Ausführungsform der erfindungsgemäßen Küvette 10 eines der beiden transparenten Elemente 11, 12 auch als ebene Platte ausgebildet sein könnte.

Damit die Küvette 10 für Ultraschall-Applikationen geeignete Festigkeit aufweist, ist der Abstandshalter 13 aus einem spritzgussfähigen Kunststoff mit hohen E-Modulwerten von vorzugsweise mehr als 2500 MPa, noch bevorzugter mehr als 5000 MPa, gefertigt.

Die transparenten Elemente 11, 12 sind aus Glas, vorzugsweise Pressglas, hergestellt, das sich gut bearbeiten lässt. Alternativ sind sie aus einem Kunststoff gefertigt, der folgende Eigenschaften aufweist: geringe Spannungsdoppelbrechung, geringes Kriechverhalten, keine/geringe Gasdurchlässigkeit, chemische Resistenz, Wärmeformbeständigkeit, optische Transparenz im sichtbaren (VIS) und nahen Infrarot- (NIR) Wellenlängenbereich. Bevorzugt bestehen die transparenten Elemente aus Kunststoffen aus der Gruppe der thermoplastischen Olefin-Polymere.

Das Dichtungselement 16 besteht aus einem Elastomer, vorzugsweise mit einer Shore D Härte zwischen 50 und 80, noch bevorzugter mit einer Shore D Härte zwischen 60 und 70. Es liegt flächig an Seitenwänden 11b, 12b der Absätze 11a, 12a der transparenten Elemente 11, 12 an. Um zu verhindern, dass ein Anteil der Probe aufgrund des Kapillareffekts in die Grenzfläche zwischen den Seitenwänden 11b, 12b und dem Dichtungselement 16 eindringt, wird das Dichtungselement 16 gegen die Absätze 11, 12 vorgespannt, wodurch ein Abschnitt 16a des Dichtungselements 16 in den Zwischenraum zwischen den einander zugewandten Stirnflächen der Absätze 11a, 12a drängt und diesen seitlich verschließt. Dieses Eindringen des Abschnitts 16a in den Zwischenraum zwischen den einander zugewandten Stirnflächen der Absätze 11a, 12a wird durch die Schräge der Seitenwände 11b, 12b gefördert, die als Anfasung wirken. Zur Verhinderung von Streulichtbildung an den Seitenkanten des Probenkanals 15 ist weiters ein lichtundurchlässiges Material für das Dichtungselement 16 ausgewählt.

Die Küvette 10 wird hergestellt, indem zunächst das erste transparente Element 11 so mit dem Abstandshalter 13 verklebt wird, dass sich sein Absatz 11a in die Aussparung 14 erstreckt. Anschließend wird das Dichtungselement 16, wie in den Figuren 1A und 1B dargestellt, auf dem Absatz 11 a angebracht. Danach wird das zweite transparente Element 12 auf dem Abstandshalter 13 positioniert, so dass sein Absatz 12a in die Aussparung 14 gerichtet ist und gegen das Dichtungselement 16 drückt. Dadurch entsteht der Probenkanal 15. Mittels einer Mikrometerschraube wird die Höhe des zweiten transparenten Elements 12 so eingestellt, dass der Probenkanal die vordefinierte Höhe h5 aufweist. Das Justieren des Abstandes des zweiten transparenten Elements 12 erfolgt bevorzugt durch online-Messen des aktuellen Abstandes der Stirnflächen (inneren Grenzflächen des Probenkanals) der Absätze 11 a, 12a mittels eines konfokalen Mikroskops.

Anschließend wird ein UV-härtender Kleber in die Grenzschicht zwischen dem Abstandshalter 13 und dem zweiten transparenten Element 12 eingebracht und durch Bestrahlung mit UV-Licht ausgehärtet, wodurch eine Kleberschicht 17b mit exakt definierter Dicke erhalten wird.

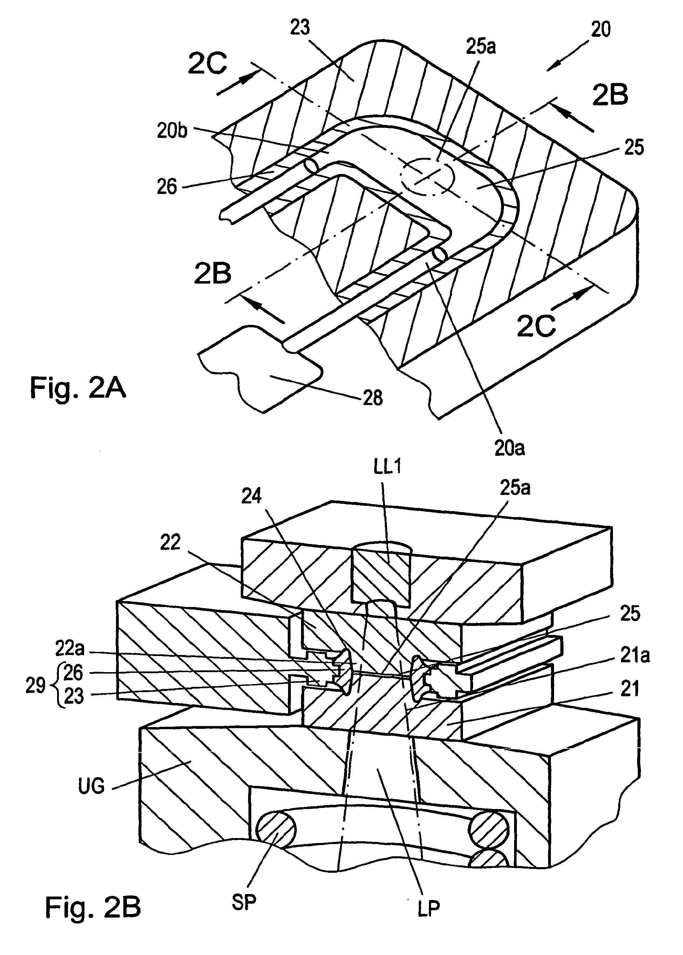

Anhand von Fig. 2A und Fig. 2B wird nun eine zweite Ausführungsform einer erfindungsgemäßen Küvette 20 erklärt. Die Küvette 20 weist einen Abstandshalter 23, ein erstes und ein zweites transparentes Element 21, 22 und ein Dichtungselement 26 auf. Die beiden transparenten Elemente 21, 22 weisen jeweils einen Absatz 21a, 22a auf und sind einander gegenüberliegend so an dem Abstandshalter 23 angeordnet, dass die beiden Absätze 21a, 22a einander zugewandt sind und sich in eine kanalförmige Aussparung 24 erstrecken. Dabei weisen die Stirnflächen der Absätze 21a, 22a einen solchen Abstand voneinander auf, der einer definierten Höhe eines zwischen den Stirnflächen der Absätze 21a, 22a gebildeten Probenkanals 25 entspricht. Der Probenkanal 25 wird um seinen Umfang herum von einem Dichtungselement 26 abgedichtet, wobei das Dichtungselement 26 an den Mantelflächen der Absätze 21 a, 22a anliegt und in den Spalt dazwischen drängt.

Im Unterschied zur ersten Ausführungsform ist bei der zweiten Ausführungsform einer erfindungsgemäßen Küvette 20 das Dichtungselement 26 mit dem Abstandshalter 23 als ein Kombinationselement 29, z.B. ein 2-Komponenten-Spritzgussteil oder ein Verbund-Pressteil, gebildet. Dies bringt wesentliche Vorteile beim Assemblieren der Küvette 20. Die Materialien des Abstandshalters 23 und des Dichtungselements 26 sind wie oben angegeben. Der Probenkanal 25 weist einen optischen Messbereich 25a auf, in dem die transparenten Elemente 21, 22 planparallel angeordnet sind. Zur Vermeidung von Randeffekten ist der optische Messbereich 25a vom Rand des Probenkanals 25 beabstandet. Nahe dem Messbereich 25a mündet ein Lichtleiter LL1, der Licht durch den Messbereich 25a entlang des Lichtpfads LP ausstrahlt, das nach seinem Durchgang durch den Messbereich 25 spektroskopisch analysiert wird. Alternativ dazu sind auch reflektive optische Messsysteme vorgesehen.

Der Probenkanal 25 ist bogenförmig ausgebildet, so dass die Einlassöffnung 20a für die Probe PB und die Auslassöffnung 20b auf derselben Seite liegen, was den Vorteil eines verringerten Bauvolumens und einer erleichterten Austauschbarkeit der Küvette mit sich bringt. Weiters ist zu beachten, dass sich von einem zentralen Bereich, der den Messbereich 25a umfasst, zur Einlassöffnung 20a und zur Auslassöffnung 20b hin die Breite des Probenkanals 25 verjüngt, dabei aber die Probenkanalhöhe zunimmt, so dass die Querschnittsfläche des Probenkanals 25 über seine Länge im Wesentlichen konstant bleibt. Man unterbindet damit Wirbelbildung der Probe PB im Probenkanal 25. Für denselben Zweck weist der Probenkanal 25 nur stetige Veränderungen der Kanalform auf

Beim Assemblieren der Küvette 20 können die beiden transparenten Elemente 21, 22 mit dem Abstandshalter 23 verklebt werden, wie oben beschrieben. Als Alternative bietet sich bei dieser Ausführungsform auch Verpressen oder Stecken an.

Die Küvette 20 ist spezifisch für eine spektroskopische Analyse einer Blutprobe als Probe PB unter Durchführung von Hämolysieren der Blutprobe in der Küvette 20 vor dem spektroskopischen Analysieren ausgebildet. Dazu wird die Küvette 20 mechanisch in einem Ultraschallgenerator UG eingespannt (symbolisiert durch die Vorspannfeder SP). Der Ultraschallgenerator UG erzeugt Ultraschallenergie und überträgt diese auf die transparenten Elemente 21, 22, wodurch im Probenkanal 25 Hämolyse der Probe PB stattfindet.

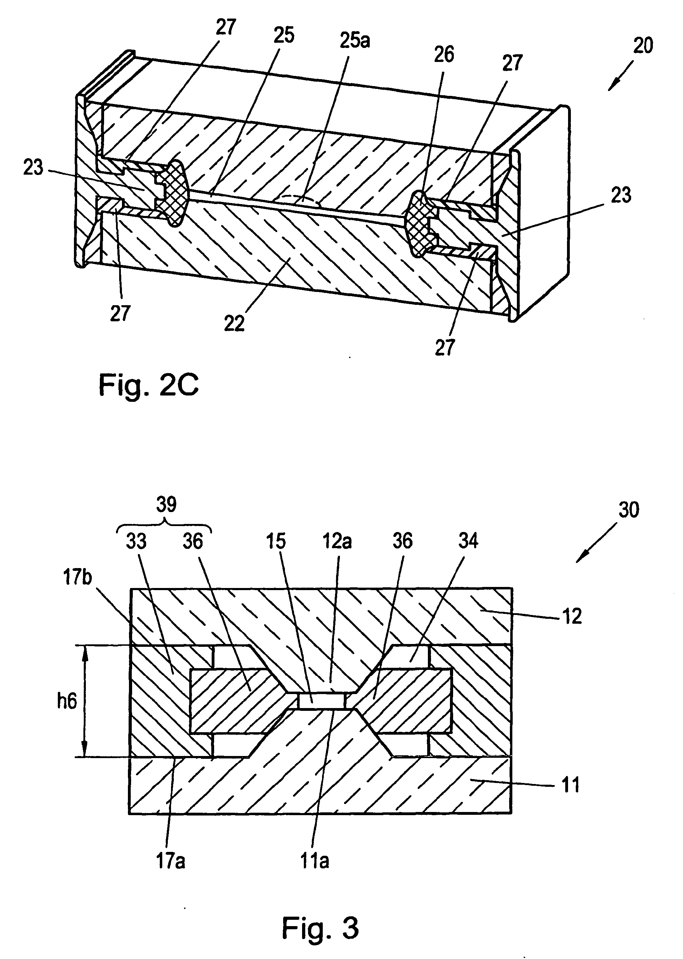

In Fig. 2C, die einen Längsschnitt durch den Probenkanal 25 zeigt, ist am besten zu sehen, dass der Probenkanal 25 sich zum Messbereich 25a keilförmig verjüngende Einlaufschrägen aufweist und im Messbereich 25 einen planparallelen Verlauf der den Probenkanal definierenden Flächen der transparenten Elemente 21, 22 aufweist. Weiters sind in Fig. 2C auch die Kleberschichten 27 zu sehen, mit denen der Abstandshalter 23 mit den beiden transparenten Elementen 21, 22 verklebt ist. Der Kleber ist ein nach dem Härten formstabiler Kleber, so dass die Kleberschichten 27 eine definierte Dicke aufweisen.

Nachfolgend werden anhand der schematischen Querschnittsdarstellungen von Fig. 3, Fig. 4 und Fig. 5 weitere Varianten von erfindungsgemäßen Küvetten erklärt. Es sei aber betont, dass die Erfindung nicht auf die dargestellten Ausführungsbeispiele beschränkt ist.

Zunächst auf die Fig. 3 Bezug nehmend, weist diese Küvette 30 dieselben transparenten Elemente 11, 12 auf wie die in Fig. 1 dargestellte und oben beschriebene Küvette 10. Wiederholend sei erwähnt, dass das erste und das zweite transparente Element 11, 12 eine im Wesentlichen ebene, plattenförmige Basiskonfiguration und jeweils einen trapezförmigen Absatz 11a, 12a aufweisen, der sich von der plattenförmigen Basis vorstreckt. Die transparenten Elemente 11, 12 werden von einem Abstandshalter 33 in einem Abstand zueinander gehalten, wobei der Abstandshalter 33 eine Höhe h6 besitzt, planparallele Ober- und Unterseiten aufweist und eine Aussparung 34 definiert. Der Abstandshalter 33 ist z.B. aus einem spritzgussfähigen Kunststoff mit hohen E-Modulwerten von vorzugsweise mehr als 2500 MPa gefertigt. Die beiden transparenten Elemente 11, 12 sind mit dem Abstandshalter 33 mittels formstabiler Kleberschichten 17a, 17b verklebt. Weiters umfasst die Küvette 30 ein Dichtungselement 36, das in der Aussparung 34 des Abstandshalters 33 zwischen den Absätzen 11a, 12a angeordnet ist und gegen die Seitenwände der Absätze 11a, 12a anliegt. Zusammen mit dem Dichtungselement 36 begrenzen die einander zugewandten Flächen der Absätze 11a, 12a den Probenkanal 15. Das Dichtungselement 16 besteht aus einem Elastomer, vorzugsweise mit einer Shore D Härte zwischen 50 und 80, noch bevorzugter mit einer Shore D Härte zwischen 60 und 70. Im Unterschied zur Ausführungsform von Fig. 1 ist in der Ausführungsform von Fig. 3 das Dichtungselement 36 zusammen mit dem Abstandshalter 33 als Kombinationselement 39 ausgebildet. Die Verbindung von Abstandshalter 33 und Dichtungselement 36 zum Kombinationselement 39 kann beispielsweise durch Verkleben, Zusammenstecken oder Koextrudieren erfolgen.

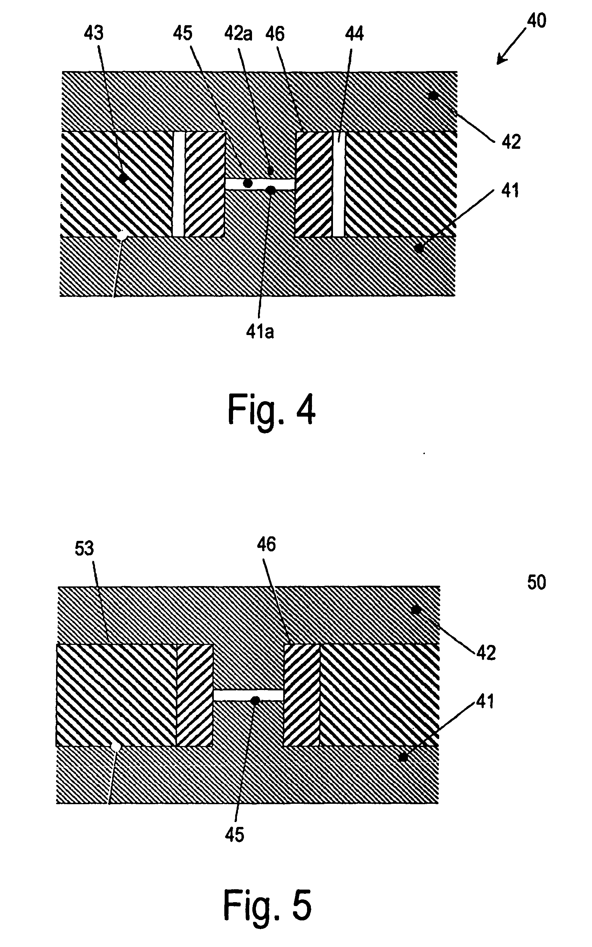

Fig. 4 zeigt einen schematischen Querschnitt einer weiteren Ausführungsform einer erfindungsgemäßen Küvette 40. Diese unterscheidet sich von den Ausführungsformen der Figuren 1 und 3 insofern, als sie ein erstes und ein zweites transparentes Element 41, 42 mit im Wesentlichen ebener, plattenförmiger Basiskonfiguration, jedoch mit jeweils einem im Querschnitt rechteckigen Absatz 41 a, 42a aufweist, die sich von der plattenförmigen Basis vorstrecken. Die transparenten Elemente 41, 42 werden wie bei den anderen Ausführungsformen von einem Abstandshalter 43 in einem Abstand zueinander gehalten. Weiters umfasst die Küvette 40 ein Dichtungselement 46, das in einer vom Abstandshalter 43 definierten Aussparung 44 um die Absätze 41a, 42a herum angeordnet ist und gegen die Seitenwände der Absätze 41a, 42a anliegt. Zusammen mit dem Dichtungselement 46 begrenzen die einander zugewandten Flächen der Absätze 41a, 42a einen Probenkanal 45. Die Materialien der transparenten Elemente 41, 42, des Abstandshalters 43 und des Dichtungselements 46 sind dieselben wie bei den anderen Ausführungsformen.

Fig. 5 zeigt einen schematischen Querschnitt einer weiteren Ausführungsform einer erfindungsgemäßen Küvette 50, die sich von der Ausführungsform der Fig. 4 nur insofern unterscheidet, als sie einen Abstandshalter 53 aufweist, der verglichen mit dem Abstandshalter 43 eine kleinere Aussparung definiert, die vollständig vom Dichtungselement 46 eingenommen wird. Der Abstandshalter 53 und das Dichtungselement 46 können auch als Kombinationselement ausgebildet sein.

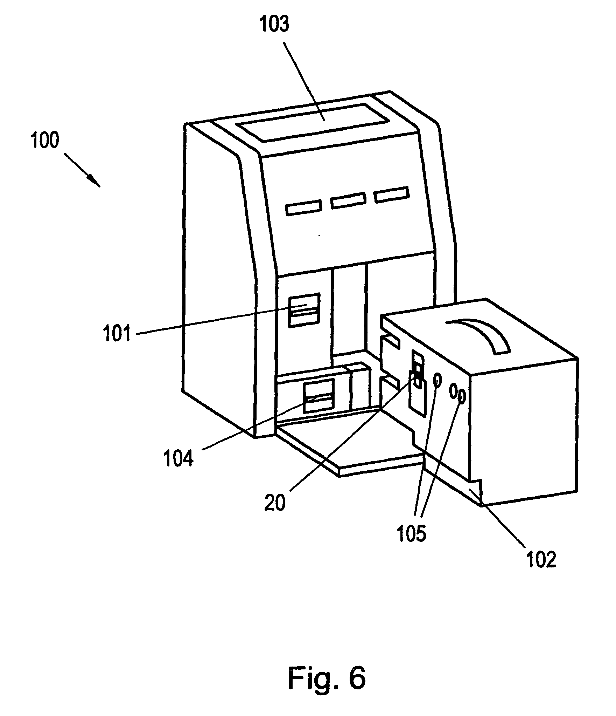

Fig. 6 zeigt schematisch ein modulares Konzept eines spektroskopischen Analysators 100, in dem die oben anhand der Figuren 1 bis 5 beschriebene erfindungsgemäße Küvette 20 verwendet wird. Der Analysator 100 ist als "beinahe wartungsfrei" ausgelegt, so dass alle zum laufenden Betrieb benötigten Verbrauchsmaterialien in Form von Kassetten und/oder Modulen (so genannten "Consumables") vorliegen und daher auch von (technisch) ungeschultem Personal getauscht werden können. Die verwendeten Verbrauchsmaterialien sind in diesem Ausführungsbeispiel in folgenden Consumables zusammengefasst:
● Eine Sensorkassette 101, welche zumindest einen Teil, vorzugsweise alle der für die Analytbestimmung benötigten Sensoren enthält.
● Ein Fluidpack 102, das Flüssigkeitsbehälterund Abfallbehälter enthält, welche die zum Betrieb des Analysators 100 benötigten Betriebsflüssigkeiten, wie beispielsweise Kalibrations- oder Referenzflüssigkeiten, Wasch- und Reinigungsflüssigkeiten oder auch Reagenzienflüssigkeiten, enthält. Optional können im Fluidpack 102 auch weitere Elemente oder Funktionalitäten wie das gesamte Fluidiksystem oder Teile davon, die Probeneingabevorrichtung oder auch weitere sensorische Komponenten enthalten sein. Erfindungsgemäß ist in das Fluidpack 102 eine erfindungsgemäße Küvette 20 inkl. der zugehörigen flüssigkeitszu- und - abführenden Fluidikwege integriert, wie weiter unten näher ausgeführt wird. Das heißt, dass die Küvette 20 turnusmäßig mit jedem Austausch des Fluidpacks 102 getauscht wird (z.B. in Abständen von mehreren Wochen oder nach Ablauf einer bestimmten Zahl von Messungen)
● Eine Druckerpapierkassette 103 für einen internen Drucker
● Optional eine Qualitätskontrollkassette 104 mit Referenzlösungen in Ampullenform zur Durchführungen einer automatisierten Qualitätskontrolle, welche das Personal durch einfache intuitive Handgriffe selbst tauschen kann.

Die hier geschilderte Untergliederung der Consumables ist nur exemplarisch. Es ist auch denkbar, dass (Teil-)Funktionalitäten oder (Teil-)Elemente mehrerer Consumables zusammengefasst werden, so dass beispielsweise weniger oder sogar nur ein Consumable benötigt wird. Andererseits ist es auch denkbar, dass (Teil-)Funktionalitäten oder (Teil-) Elemente einzelner Consumables auf mehrere verteilt werden (z.B. auf mehrere Sensorkassetten oder -module). Wesentlich ist aber der Grundgedanke, in eines der verwendeten Consumables die erfindungsgemäße Küvette einzubauen, so dass sie zusammen mit diesem Consumable tauschbar ist.

Die Consumables werden untereinander bzw. mit dem Analysator durch aufeinander abgestimmte Schnittstellen, z.B. in Form fluidischer Andocknippel 105 gekoppelt. Das mechanische Verbinden der Consumables mit den respektiven Gegenparts kann durch einen einfachen manuellen Bewegungsablauf direkt durch den Benutzer erfolgen, oder durch im Gerät befindliche Antriebe, die die Ankopplung automatisch durchführen, nachdem der Benutzer die Kassette nur in "Position" gebracht hat.

Der Blutgas-Analysator 100 enthält ein Oxymetermodul, in dem durch ein spektrophotometrisches Messverfahren die Konzentrationen der Hämoglobinderivate 02Hb, HHb, COHb, MetHb, sowie der Blutparameter tHb (total hemoglobin), SO2 (oxygen saturation) und Bilirubin bestimmt werden. Dabei werden charakteristische Absorptionseigenschaften dieser Substanzen genutzt und die Messwerte über einen mathematischen Algorithmus ausgewertet. Um die geforderte Messgenauigkeit erreichen zu können, ist zumeist eine Hämolyse des Vollblutes vor der optischen Messung notwendig. Hierzu können beispielsweise die Blutzellen mittels Ultraschallenergie zerstört werden, um eine Messung ohne störende Lichtstreuungseffekte durchführen zu können. Auch alternative Hämolyseprinzipien wie beispielsweise chemische Hämolyseverfahren können hierzu eingesetzt werden. Das Oxymetermodul beinhaltet eine Lampeneinheit mit Lichtquelle(n), fluidische Zufuhr- und Abfuhrleitungen, einen Hämolysator, in den die Küvette 20 einsetzbar und entnehmbar ist; einen Lichtleiter, der das in der Lampeneinheit erzeugte Licht zur Küvette 20 zuführt und einen Lichtleiter, der das durch die Probe in der Küvette 20 hindurchgegangene Licht sammelt und an einen Polychromator weiterleitet, der eine spektrale Auftrennung des empfangenen Lichts vornimmt, sowie einen Detektor zur Auswertung der spektralen Bereiche des empfangenen Lichts.

Der Hämolysator ist so ausgestaltet, dass die Küvette 20 als Teil des Consumable 102 beim Einführen des Consumable 102 in den Analysator 100 in den Hämolysator eingesetzt wird und beim Herausziehen des Consumable 102 aus dem Analysator 100 aus dem Hämolysator entfernt wird. Durch diese Konstruktion vermeidet man die Verstopfungsprobleme an Oxymetermodulen bekannter Analysatoren, bei denen eine optische Messkammer (Küvette) als integriertes Bestandteil des Analysators ausgeführt ist, welches permanent im Gerät verbleibt.

## Patentansprüche

1. Küvette (10; 20; 30; 40; 50) mit zumindest einem Dichtungselement (16; 26; 36; 46) und zwei transparenten Elementen (11, 12; 21, 22; 41, 42), wobei die beiden transparenten Elemente (11, 12; 21, 22; 41, 42) im Abstand voneinander angeordnet sind und zwei einander gegenüberliegende Begrenzungsflächen eines Probenkanals (15; 25; 45) definieren und das zumindest eine Dichtungselement (16; 26; 36; 46) Seitenwände des Probenkanals (15; 25; 45) definiert, wodurch der Probenkanal (15; 25; 45) als ein in Längsrichtung geschlossener Kanal mit einer Einlassöffnung (10a) und einer Auslassöffnung (10b) ausgebildet ist,
**dadurch gekennzeichnet, dass** zumindest ein Abstandshalter (13; 23; 33; 43; 53) vorgesehen ist, der die transparenten Elemente (11, 12; 21, 22; 41, 42) im Abstand voneinander hält, und dass zumindest eines der beiden transparenten Elemente (11, 12; 21, 22; 41, 42) einen Absatz (11a, 12a; 21a, 22a; 41a, 42a) aufweist, der sich in Richtung zum anderen transparenten Element erstreckt und eine Begrenzungsfläche des Probenkanals (15; 25; 45) bildet, so dass die Höhe (h5) des Probenkanals geringer ist als die Höhe (h6) des zumindest einen Abstandshalters (13; 23; 33; 43; 53).

2. Küvette nach Anspruch 1, **dadurch gekennzeichnet, dass** der Abstandshalter (13; 23; 33; 43; 53) aus einem spritzgussfähigen Kunststoff mit hohen E-Modulwerten von vorzugsweise mehr als 2500 MPa, noch bevorzugter mehr als 5000 MPa, besteht.

3. Küvette nach Anspruch 1 oder 2, **dadurch gekennzeichnet, dass** die transparenten Elemente (11, 12; 21, 22; 41, 42) mit dem Abstandshalter (13; 23; 33; 43; 53) mittels eines formbeständigen Klebstoffs (17a, 17b; 27) verklebt sind odermit dem Abstandshalter verpresst, zusammengesteckt oder mittels Klammern verbunden sind.

4. Küvette nach einem der vorhergehenden Ansprüche, **dadurch gekennzeichnet, dass** das Dichtungselement (16; 26; 36; 46) im Bereich des Absatzes (11a, 12a; 21a, 22a; 41a, 42a) an zumindest einem der beiden transparenten Elemente (11, 12; 21, 22; 41, 42) in den Zwischenraum zwischen den transparenten Elementen (11, 12; 21, 22; 41, 42) ragt.

5. Küvette nach einem der vorhergehenden Ansprüche, **dadurch gekennzeichnet, dass** das Dichtungselement (16; 26; 36; 46) an einer Mantelfläche (11b, 12b) des Absatzes eines bzw. beider transparenter Elemente anliegt.

6. Küvette nach einem der vorhergehenden Ansprüche, **dadurch gekennzeichnet, dass** das Dichtungselement (16; 26; 36; 46) aus einem elastischen Material, vorzugsweise mit einer Shore D Härte zwischen 50 und 80, noch bevorzugter mit einer Shore D Härte zwischen 60 und 70, besteht.

7. Küvette nach einem der vorhergehenden Ansprüche, **dadurch gekennzeichnet, dass** das Dichtungselement (16; 26; 36; 46) aus einem lichtundurchlässigen Material besteht

8. Küvette nach einem der vorhergehenden Ansprüche, **dadurch gekennzeichnet, dass** das Dichtungselement (26; 36; 46) und der Abstandshalter (23; 33; 53) ein Kombinationselement (29; 39), z.B. ein 2-Komponenten-Spritzgussteil oder ein Verbund-Pressteil, bilden.

9. Küvette nach einem der vorhergehenden Ansprüche, **dadurch gekennzeichnet, dass** die transparenten Elemente (11, 12; 21, 22; 41, 42) Glaselemente, vorzugsweise Pressglaselemente, sind oder aus Kunststoffen aufgebaut sind, wobei vorzugsweise die Kunststoffe aus der Gruppe der thermoplastischen Olefin-Polymere ausgewählt sind.

10. Küvette nach einem der vorhergehenden Ansprüche, **dadurch gekennzeichnet, dass** der Probenkanal (25) einen optischen Messbereich (25a) aufweist, in dem die transparenten Elemente planparallel angeordnet sind, wobei vorzugsweise der optische Messbereich vom Rand des Probenkanals beabstandet ist.

11. Küvette nach einem der vorhergehenden Ansprüche, **dadurch gekennzeichnet, dass** sich die Breite des Probenkanals (25) zur Einlassöffnung und zur Auslassöffnung hin verjüngt und dabei die Höhe h5 des Probenkanals (25) zunimmt, wobei vorzugsweise die Querschnittsfläche des Probenkanals über seine Länge im Wesentlichen konstant bleibt.

12. Küvette nach einem der vorhergehenden Ansprüche, **dadurch gekennzeichnet, dass** die Küvette (10; 20; 30; 40; 50) in ein Consumable (102) des spektroskopischen Analysators (100), insbesondere in ein Fluidpack, das Betriebsflüssigkeiten und/oder Abfallbehälter umfasst, integriert ist.

13. Verfahren zum spektroskopischen Analysieren einer Probe (28) unter Verwendung einer Küvette (10; 20; 30; 40; 50) nach einem der Ansprüche 1 bis 12.

14. Verfahren zum Hämolysieren einer Blutprobe unter Verwendung einer Küvette (10; 20; 30; 40; 50) nach einem der Ansprüche 1 bis 12.

## Claims

1. Cuvette (10; 20; 30; 40; 50) with at least one sealing element (16; 26; 36; 46) and two transparent elements (11, 12; 21, 22; 41, 42) where the two transparent elements (11, 12; 21, 22; 41, 42) are arranged at a distance from one another and define two opposing boundary faces of a sample channel (15; 25; 45) and the at least one sealing element (16; 26; 36; 46) defines side walls of the sample channel (15; 25; 45) by means of which the sample channel (15; 25; 45) is formed as a channel that is closed in the longitudinal direction with an inlet opening (10a) and an outlet opening (10b), **characterized in that** at least one spacer (13; 23; 33; 43; 53) is provided which keeps the transparent elements (11, 12; 21, 22; 41, 42) at a distance from one another and that at least one of the two transparent elements (11, 12; 21, 22; 41, 42) has a projection (11a, 12a; 21a, 22a; 41a, 42a) which extends towards the other transparent element and forms a boundary surface of the sample channel (15; 25; 45) such that the height (h5) of the sample channel is less than the height (h6) of the at least one spacer (13; 23; 33; 43; 53).

2. Cuvette according to claim 1, **characterized in that** the spacer (13; 23; 33; 43; 53) consists of an injection-mouldable plastic having high E module values of preferably more than 2500 MPa, even more preferably more than 5000 MPa.

3. Cuvette according to claim 1 or 2, **characterized in that** the transparent elements (11, 12; 21, 22; 41, 42) are glued to the spacer (13; 23; 33; 43; 53) by means of a dimensionally stable adhesive (17a, 17b; 27) or are pressed with the spacer, plugged together with the spacer or joined to the spacer by clips.

4. Cuvette according to one of the previous claims, **characterized in that** the sealing element (16; 26; 36; 46) projects into the gap between the transparent elements (11, 12; 21, 22; 41, 42) in the area of the projection (11a, 12a; 21a, 22a; 41a, 42a) on at least one of the two transparent elements (11, 12; 21, 22; 41, 42).

5. Cuvette according to one of the previous claims, **characterized in that** the sealing element (16; 26; 36; 46) rests against a lateral surface (11b, 12b) of the projection of one or both transparent elements.

6. Cuvette according to one of the previous claims, **characterized in that** the sealing element (16; 26; 36; 46) consists of an elastic material preferably with a Shore D hardness between 50 and 80, even more preferably with a Shore D hardness between 60 and 70.

7. Cuvette according to one of the previous claims, **characterized in that** the sealing element (16; 26; 36; 46) consists of a light-impermeable material.

8. Cuvette according to one of the previous claims, **characterized in that** the sealing element (26; 36; 46) and the spacer (23; 33; 53) form a combination element (29; 39), e.g. a two-component injection-moulded part or a composite pressed part.

9. Cuvette according to one of the previous claims, **characterized in that** the transparent elements (11, 12; 21, 22; 41, 42) are glass elements, preferably pressed glass elements, or are composed of plastics in which case plastics from the group comprising thermoplastic olefin polymers are preferably selected.

10. Cuvette according to one of the previous claims, **characterized in that** the sample channel (25) has an optical measuring area (25a) in which the transparent elements are in a plane-parallel arrangement and the optical measuring area is preferably spaced apart from the edge of the sample channel.

11. Cuvette according to one of the previous claims, **characterized in that** the width of the sample channel (25) tapers towards the inlet opening and outlet opening and at the same time the height h5 of the sample channel (25) increases and the cross-sectional area of the sample channel preferably remains essentially constant over its length.

12. Cuvette according to one of the previous claims, **characterized in that** the cuvette (10; 20; 30; 40; 50) is integrated into a consumable (102) of the spectroscopic analyzer (100) and in particular into a fluid pack which contains operating liquids and/or waste containers.

13. Method for spectroscopically analysing a sample (28) using a cuvette (10; 20; 30; 40; 50) according to one of the claims 1 to 12.

14. Method for haemolysing a blood sample using a cuvette (10; 20; 30; 40; 50) according to one of the claims 1 to 12.

## Revendications

1. Cuvette (10 ; 20 ; 30 ; 40 ; 50) comprenant au moins un élément d'étanchéité (16 ; 26 ; 36 ; 46) et deux éléments transparents (11, 12 ; 21, 22 ; 41, 42), les deux éléments transparents (11, 12 ; 21, 22 ; 41, 42) étant disposés espacés l'un de l'autre et définissant deux surfaces de délimitation d'un canal d'échantillon (15 ; 25 ; 45), situées l'une en face de l'autre, et définissant au moins l'un des côtés latéraux de l'élément d'étanchéité (16 ; 26 ; 36 ; 46) du canal d'échantillon (15 ; 25 ; 45), par quoi le canal d'échantillon (15 ; 25 ; 45) est formé par un canal, fermé dans la direction longitudinale, avec une ouverture d'entrée (10a) et une ouverture de sortie (10b),
caractérisée en ce qu'au moins une entretoise (13 ; 23 ; 33 ; 43 ; 53) est prévue, qui maintient les éléments transparents (11, 12 ; 21, 22 ; 41, 42) séparés avec un espace entre eux, et qu'au moins l'un des deux éléments transparents (11, 12 ; 21, 22 ; 41, 42) présente une partie quasi horizontale (11a, 12a ; 21a, 22a ; 41a, 42a) qui s'étend en direction de l'autre élément transparent et forme une surface de délimitation du canal d'échantillon (15 ; 25 ; 45), de sorte que la hauteur (h5) du canal d'échantillon est inférieure à la hauteur (h6) d'au moins une des entretoises (13 ; 23 ; 33 ; 43 ; 53).

2. Cuvette selon la revendication 1 **caractérisée en ce que** l'entretoise (13 ; 23 ; 33 ; 43 ; 53) est constituée d'une matière synthétique pouvant être moulée par extrusion possédant des valeurs de modules E élevées, de préférence supérieures à 2500 MPa, et de manière encore plus préférentielle, supérieures à 5000 MPa.

3. Cuvette selon les revendications 1 ou 2 **caractérisée en ce que** les éléments transparents (11, 12 ; 21, 22 ; 41, 42) sont collés avec l'entretoise (13 ; 23 ; 33 ; 43 ; 53) au moyen un produit de collage (17a ; 17b ; 27) indéformable, ou sont pressés contre l'entretoise, rassemblés avec elle ou reliés à elle au moyen de pinces.

4. Cuvette selon l'une des revendications précédentes **caractérisée en ce que** l'élément d'étanchéité (16 ; 26 ; 36 ; 46) dépasse dans l'espace entre les éléments transparents (11, 12 ; 21, 22 ; 41, 42) pour au moins l'un des deux éléments transparents (11, 12 ; 21, 22 ; 41, 42) dans la zone de la partie quasi horizontale (11a, 12a ; 21a, 22a ; 41a, 42a).

5. Cuvette selon l'une des revendications précédentes **caractérisée en ce que** l'élément d'étanchéité (16 ; 26 ; 36 ; 46) est adjacent à une surface d'enveloppe (11b, 12b) de la partie quasi horizontale des deux éléments transparents respectifs.

6. Cuvette selon l'une des revendications précédentes **caractérisée en ce que** l'élément d'étanchéité (16 ; 26 ; 36 ; 46) est constitué d'un matériau élastique, de préférence avec une dureté Shore entre 50 et 80, et de manière encore davantage préférée, avec une dureté Shore entre 60 et 70.

7. Cuvette selon l'une des revendications précédentes **caractérisée en ce que** l'élément d'étanchéité (16 ; 26 ; 36 ; 46) est constitué d'un matériau occultant la lumière.

8. Cuvette selon l'une des revendications précédentes **caractérisée en ce que** l'élément d'étanchéité (16 ; 26 ; 36 ; 46) et l'entretoise (23 ; 33 ; 53) forment un élément de combinaison (29 ; 39), par exemple, une pièce moulée par extrusion à 2 composantes ou un élément pressé composite.

9. Cuvette selon l'une des revendications précédentes **caractérisée en ce que** les éléments transparents (11, 12 ; 21, 22 ; 41, 42) sont des éléments en verre, de préférence des éléments en verre pressé ou fabriqués à base de matières synthétiques, les matières synthétiques étant de préférence choisies dans le groupe des polymères oléfiniques thermoplastiques.

10. Cuvette selon l'une des revendications précédentes **caractérisée en ce que** le canal d'échantillon (25) présente un domaine de mesure optique (25a) dans lequel les éléments transparents sont disposés de manière plan parallèle, le domaine de mesure optique étant de préférence espacé du bord du canal d'échantillons.

11. Cuvette selon l'une des revendications précédentes **caractérisée en ce que** la largeur du canal d'échantillon (25) diminue vers l'ouverture d'entrée et vers l'ouverture de sortie et qu'ainsi, la hauteur h5 du canal d'échantillon (25) augmente, la surface de la section du canal d'échantillon restant, de préférence, dans l'ensemble, constante sur sa longueur.

12. Cuvette selon l'une des revendications précédentes **caractérisée en ce que** la cuvette (10 ; 20 ; 30 ; 40 ; 50) est intégrée dans un consommable (102) de l'analyseur spectroscopique (100), en particulier, un Fluidpack qui comprend les liquides pour la mise en oeuvre et/ou les récipients pour les déchets.

13. Procédé pour l'analyse spectroscopique d'un échantillon (28) par l'utilisation d'une cuvette (10 ; 20 ; 30 ; 40 ; 50) selon l'une des revendications de 1 à 12.

14. Procédé pour hémolyser un échantillon de sang par l'utilisation d'une cuvette (10 ; 20 ; 30 ; 40 ; 50) selon l'une des revendications de 1 à 12.
